# EUROPEAN PATENT APPLICATION

(11) **EP 2 975 818 A1**
(43) Date of publication of application: **20.01.2016**
(21) Application number: 14177035.4
(22) Date of filing: 15.07.2014
(51) Int. Cl.: H04L 29/06, G06F 21/55, H04W 12/12

(54) **Method and system for enhancing the security of mobile devices**

(71) Applicant: Fundació Privada Barcelona Digital Centre Tecnologic, 08018 Barcelona (ES); Caixabank S.A., 08028 Barcelona (ES)
(72) Inventor: Paredes, Ignasi, 08030 Barcelona (ES); Susin, Daniel, 08015 Barcelona (ES); Reyes, Mario, 22520 Fraga (Huesca) (ES); Maawad, Mario, 08013 Barcelona (ES)
(74) Representative: Mohammadian, Dario

(57) **Abstract**

The invention provides methods and apparatus for enhancing the security of a communication system comprising at least one mobile device and at least one entity communicating with the at least one mobile device. The client-server architecture combines mobile traffic data together with mobile status data in order to maximize the probability of successfully identifying anomalous patterns and/or potential infections or attacks is increased. This in turn enables the effective mitigation of such problems. Hence the security of the device, and the system with which it interacts, is enhanced, also for advance malware types, independently from the security architecture of the device or the available privileges.

## Description

### TECHNICAL FIELD

The present invention relates generally to the field of mobile device security, and in particular, to enhancing the security of mobile devices.

### BACKGROUND OF THE INVENTION

Mobile devices, namely smartphones and tablets, have been on the rise for the last years. In 2013, 526 million additional mobile devices connected to the Internet and mobile traffic was nearly 18 times the size of the global Internet with respect to 2000 (18 exabytes vs 1 exabyte). The number of devices is expected to overcome the world's population during 2014 and monthly mobile data traffic will probably surpass 15 exabytes by 2018.

Mobile devices have made their way into people's lives at every level, both personal and professional, changing their way of living. In the professional field, the convenience of having a mobile office, with corporate e-mail and documentation access, is affected by new security risks. Current mobile devices are actually pocket computers and, thus, are equally vulnerable to confidential data leakage, among others, whether it being because of an employee acting in bad faith or because the device has been infected by any kind of malicious application, or malware, that allows a non-authorized third party the access to this confidential information. Moreover, Bring Your Own Device, BYOD, policies, which allow personal smartphones to access privileged company information and resources, make such control even more challenging. Therefore corporate smartphones have become real headaches for IT managers, as they are now additional devices connected to the internal resources of the company that need to be controlled.

As it has been demonstrated with the PC and Operating Systems industry, valuable information such as the one stored in a mobile device, will always be an extremely attractive target, especially for people with the proper resources to access it (for example by using advanced malware). The adoption of smartphones has been so fast in recent years that the security industry is still in an early stage on this field, far away from their PC counterpart. Mobile malware has been on the rise the last years. This malware can go from simple applications that send SMS messages to premium numbers, costing money to the user, to complex applications that can spy on them, such as recording calls, monitoring location via GPS, copying SMS messages, contact lists, e-mails, and so on.

Some new issues arise when trying to enforce security on smartphones. One of the main limitations is that third party applications, as opposed to manufacturer applications, do not have administrator privileges on the mobile operating system. This implies that any security-related application for the mobile, such as an antivirus, will not have access to monitor, for example, the operating system's system calls or an application' behaviour. This lack of privileges is a very important drawback that directly undermines the analysis effort vital to checking the security from within the device.

Mobile malware related to Advanced Persistent Threats, APT, campaigns are also increasing. This kind of malware has the following characteristics:
- As opposed to traditional malware which tries to infect as many systems as possible, APTs have a more defined scope and a defined target, for instance, remaining undetected within a single organization while extracting information for as long as possible.
- Malware design is adapted to the particular infrastructure of its target where access is wanted.
- Once access is achieved, the main objective is to remain undetected for as long as possible while the desired information is accessed and, possibly, transmitted to the attacker.

Hence current malware is advanced in nature, as it is tailor-made, distributed at low scale and is designed to remain undetected. In the context of mobile devices, current measures at combatting these problems lack in quantity and in real effectiveness. Current solutions range from mobile antivirus applications, similar to their PC counterparts, but less sophisticated, to the use of Mobile Device Management, MDM, systems that are used to manage permissions and enforce corporate policies on the mobile devices in a centralized way.

The main inconvenient of the multiple available mobile antiviruses is that they run, as any other mobile application, with limited privileges. These limited privileges prevent an effective defense against malware, and it is even less effective against advanced malware like the one used in APTs, which typically have more resources and very specific objectives. The main features of these applications are:
- *Mainly signature-based:* Like desktop antivirus, mobile antivirus need constant synchronization for new signatures. Therefore, they do not offer protection against neither previously unknown malware nor known malware which has been modified (polymorphism).
- *Limited system monitoring:* System monitoring is limited by the secure design of the operating system itself. Every non-system application runs with limited privileges in a sandboxed environment, so the view an application has of the execution of another application is very narrow.
- *Complex application analysis:* Some solutions offer advanced application analysis using cloud infrastructures. The applications can be statically analyzed, and/or executed in a controlled environment in order to monitor their behaviour on execution.

Therefore their main disadvantages are:
- Weak against unknown malware because of the use of signatures.
- Weak against polymorphism because of the use of signatures.
- Resource consumption:
   ∘ CPU and battery (as any other application running in background).
   ∘ Network data: Signature downloads and file upload for remote analysis.
   ∘ Limited functionality because of the lack of system privileges. An application with few privileges cannot access the system's memory, nor monitor what are other applications doing. They may have access to the data partition of the file system, but if a malware is encrypted on disk, there is nothing left to analyze.
   ∘ For the reasons explained previously, these solutions are ineffective against possible mobile APTs, as the malware hides itself easily from these applications and since it also uses encryption.
- Cloud based solutions also have their inconveniences:
   ∘ Needed bandwidth to transmit an application to the cloud for performing analysis.
   ∘ Still weak against unknown threats.
   ∘ Application behaviour monitoring through sandboxing techniques can fail if the malware is prepared to avoid it. Delaying the malicious payload could be enough to trick these systems, as they usually have a limited time for executing each application.

Currently, MDM technologies are very young. In order to be truly effective, these systems depend on the Application Programming Interfaces API that the different manufacturers make available for policy enforcement. Each mobile operating system makes available different features to the MDMs, however they are still very basic in nature as they are basically used to enforce the use of passwords and their expiration time. These solutions depend on the mobile operating systems and the device manufacturers, as they are the only ones who can create the APIs capable of managing permissions and security policies on their systems. Therefore, similarly to mobile antivirus, they are still not an effective way to combat mobile malware.

Therefore a need exists to effectively solve the abovementioned problems, and in particular, to solve the problems of ineffective security of mobile devices, of limitation due to specific architectures, privileges, platforms or designs, or of advanced malware such as APTs.

### SUMMARY

It is therefore an object of the present invention to provide solutions to the above mentioned problems. In particular it is the objective of the invention to enhance the security of mobile devices, and the overall system with which they interact, in a more effective manner and independent of platforms or privileges.

The solution proposed for detecting mobile malware assumes that malware found in mobile devices does not cause real harm until confidential corporate data is leaked to the outside by using the Internet. Therefore network traffic analysis is performed in order to monitor the data generated by devices. However additional reliability in the anomalous traffic detection is provided by including mobile event data in the decision making process.

This is implemented by combining two data sources: the mobile traffic data just mentioned together with mobile status data. By combining these two sources of information, the probability of successfully identifying anomalous patterns and/or potential infections or attacks is increased. This in turn enables the effective mitigation of such problems. Hence the security of the device, and the system with which it interacts, is enhanced, also for advanced malware types, independently from the security architecture of the device or the available privileges.

Mobile status data refers to all data and information which can be gathered in relation to the operation of the mobile device at a particular instant or time interval, in other words, the data *internal* to the device. Such mobile status data can comprise, for example, the position of the device or whether the screen is turned off or on. On the other hand, mobile traffic data refers to all the data which is transmitted or received, in relation to the exchange of information, hence it refers to the data *external* to the device. The network activity generated by the device, either due to user behaviour (for example web browsing) or by a malware (for example data leakage) are two examples.

As discussed, just the analysis of mobile traffic data, or traffic exchanged between the mobile device and its external counterparts, is not enough to effectively ascertain the existence of malware. Hence, an analysis of mobile status data in correspondence with the mobile traffic data provides an additional degree of certainty to more effectively determine the existence of such anomalies. By combining these two sources of information it is possible to determine that a security breach exists and emit a notification or alarm, as well as implement corresponding security or mitigation measures. For example, it is possible to determine that a hidden malware exists once it is determined that a large amount of data is being sent whilst the mobile is in fact not being actively used as the device is in standby mode and with its screen turned off. This is a solid indication that the large amount of data transmission is being caused by some kind of malware inside the device, and not by the user directly because of a legitimate usage.

Therefore, it is the object of the present invention to provide an apparatus in a mobile device for enhancing the security of the mobile device and the overall system with which it interacts.

It is another object of the present invention to provide an apparatus in a server for enhancing the security of the mobile device and the overall system with which it interacts.

It is another object of the present invention to provide a method in a mobile device for enhancing the security of the mobile device and the overall system with which it interacts.

It is another object of the present invention to provide a method in a server for enhancing the security of a mobile device and the overall system with which it interacts.

It is another object of the present invention to provide a computer readable medium comprising instructions, once executed on a processor, for performing the steps of a method in a mobile device for enhancing the security of the mobile device and the overall system with which it interacts.

It is another object of the present invention to provide a computer readable medium comprising instructions, once executed on a processor, for performing the steps of a method in a server for enhancing the security of a mobile device and the overall system with which it interacts.

It is another object of the present invention to enhance the security of a system comprising at least one mobile device, at least one entity in communication with the at least one mobile device, and at least one server.

The invention provides methods and devices that implement various aspects, embodiments, and features of the invention, and are implemented by various means. The various means may comprise, for example, hardware, software, firmware, or a combination thereof, and these techniques may be implemented in any single one, or combination of, the various means.

For a hardware implementation, the various means may comprise processing units implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the various means may comprise modules (for example, procedures, functions, and so on) that perform the functions described herein. The software codes may be stored in a memory unit and executed by a processor. The memory unit may be implemented within the processor or external to the processor.

Various aspects, configurations and embodiments of the invention are described. In particular the invention provides methods, apparatus, systems, processors, program codes, computer readable media, and other apparatuses and elements that implement various aspects, configurations and features of the invention, as described below.

### BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.
**FIG. 1** depicts a system according to one embodiment of the invention.
**FIG. 2** depicts the different entities of the local agent.
**FIG. 3A and 3B** depict flow diagrams of the event receiver.
**FIG. 4** depicts the inter-working between two handlers.
**FIG. 5** depicts a standard action flow diagram for general handlers.
**FIG. 6** depicts the flow diagram corresponding to the event screen on and off.
**FIG. 7** depicts the flow diagram corresponding to the event SMS sending.
**FIG. 8** depicts the flow diagram corresponding to the event application installation.
**FIG. 9** depicts a method of collecting mobile external data.
**FIG. 10** depicts a method of forwarding flow information.
**FIG. 11** depicts a method of detecting anomalies.
**FIG. 12** depicts a method of reacting to new alerts.

### DETAILED DESCRIPTION OF THE INVENTION

The invention is based on analyzing complementary information sources and correlating the data obtained from each of them thereby enhancing the decision making process regarding security threats. Both sources of information complement each other to provide a higher reliability and certainty regarding any security-based decision stemming from the collected mobile status and traffic data.

The first source of information, the mobile status data, corresponds to the different types of events that can be collected from inside the device, for instance, when the screen is turned on or off, or when an application is installed or uninstalled.

The second source of information, the mobile traffic data, is based on information related to the network traffic generated by the devices. This type of information may be obtained from any mobile operating system that allows network traffic redirection, such as a global proxy setting or a VPN tunnel.

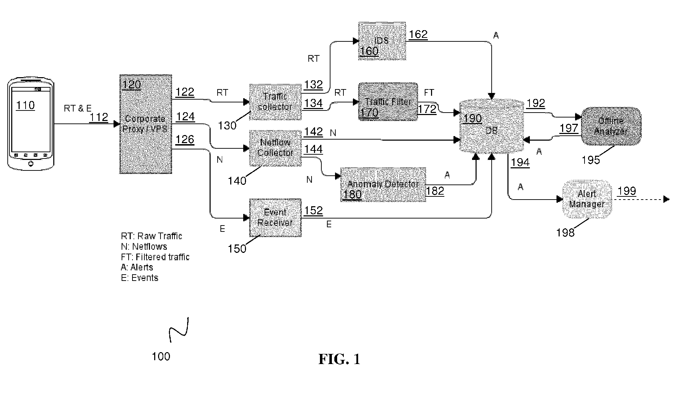

**FIG. 1** depicts a system 100 according to one embodiment of the invention. System 100 comprises at least one mobile device 110, a proxy or virtual private server 120, a traffic collector 130, a flow collector 140, an event receiver 150, an intrusion detection subsystem 160, a traffic filter 170, an anomaly detector 180, a database 190, an offline analyzer 195 and an alert manager 198. System 100 is a client-server architecture, wherein certain components of the invention are implemented within the mobile device and the remaining components are implemented in a remote server.

Within the mobile device 110 a local agent, or means for collecting mobile status data, is responsible for identifying events occurring within the device, collecting and compiling corresponding information packets in the form of mobile status data, and transmitting it to the server.

Within the server, different components are responsible for collecting and compiling corresponding information packets in the form of mobile traffic data. The server uses the mobile traffic data to classify the traffic according to its risk level; normal, suspicious, or anomalous. The normal and anomalous traffic is validated as normal and anomalous respectively due to the high confidence in the determination process. The suspicious traffic is then further analysed and classified either as normal or anomalous by using the mobile status data as valuable input. Finally, the normal data is tagged as secure and normal traffic exchange can continue. However anomalous traffic triggers an alert in order to start mitigation actions and notification actions.

The traffic data exchanged between the mobile device and the remaining components of the system is collected, received or intercepted by an access point to the server. Such access point can be a virtual private server, a proxy, or any other component. The access point can be part of the server or be external to the server. Returning to FIG. 1, this access point is represented by virtual private server VPS 120. VPS 120 serves as the single access point communicating with all mobile devices making use of the invention. In other words, it acts as a proxy centralizing the connections of all the devices, and therefore collecting all network traffic in order to be analyzed, filtered and stored. The VPS analyzes in real time the network traffic exchanged with any mobile device and stores it for later analysis. In one aspect not all of the network traffic is stored. Filters can be defined so the VPS only stores the necessary data in order to perform the different types of analysis. Initially, the stored traffic will consist of HTTP requests and responses, DNS traffic and flow information, such as NetFlow information. The VPS routes 122, 124, 126, the mobile status and traffic data to the remaining components of the server.

The traffic collector 130, or means for collecting traffic, collects raw traffic information in order to further route it to the Intrusion Detection Subsystem IDS 160 or the Traffic Filter TF 170. The Intrusion Detection Subsystem IDS 160, or means for intrusion detection, applies static rules on the mobile traffic data, so known threats can be detected as soon as possible. In case a rule matches, an alert will be sent to the database DB 190. The Traffic Filter TF 170, or means for traffic filtering, filters the network traffic before storage in database 190 to reduce the volume to more manageable levels. The traffic filters can be customized depending on the requirements of the Offline Analyzer OA 195. Only the information strictly necessary is allowed to pass through the TF further onto the OA. The TF fetches the traffic sent by the TC and filters it using defined rules and, finally, forwards the filtered traffic so it can be stored by the database DB 190. The rest of the mobile traffic data is discarded.

The flow collector FC 140, or means for flow collecting, receives the raw traffic and extracts flow information therefrom. An example of flow information is the one provided by the NetFlow protocol. The FC further routes the flow information to the Anomaly Detector and the database DB 190, or storage means.

The Anomaly Detector AD 180, or anomaly detecting means, is responsible for receiving and processing the flow information 1105 in order to generate a Normality Model based on the mobile traffic data and to compare current traffic with this model to identify anomalous patterns in the data. The output of this component is also stored in database DB 190.

The Event Receiver ER 150, or means for collecting mobile status data, receives information relating to the status of the mobile device and stores it in the database DB 190.

The Offline Analyzer OA 195, or means for validating, is responsible for performing the correlation between the mobile status data (mobile event information) and the mobile traffic data (network traffic data). This process generates alerts as well as statistical information from the network traffic. The Offline Analyzer OA 195 is responsible for validating the security index, or risk level, assigned by the AD for the cases of suspicious traffic. In other words, it determines whether the combination of mobile events that took place within the same time interval provide enough evidence to make a final decision on the suspicious traffic and validate this suspicious traffic as either normal or anomalous. Furthermore, those types of analysis that require from historical data, such as statistics generation, or those that, for processing power reasons, cannot be finished quickly enough, are candidates to be implemented through the OA as batch processes.

The OA accesses the database DB 190 to read and write data. In particular, it fetches the mobile internal and external data in order to perform correlation. The correlation between the mobile internal status data and the mobile external traffic data is achieved using the timestamp (*tstamp* field) of the respective tables. In order to find, for instance, if the screen was on or off in the time a certain traffic packet was generated, the system searches for an event for that device of the type SCREEN_ON or SCREEN_OFF immediately before the traffic's timestamp. If the event found is of the type SCREEN_ON, it means the device's screen was turned on and, hence, the user was probably actively using the device. If the event found is of the type SCREEN_OFF, it means the screen was turned off, so the user probably was not using the device at that particular time.

The Alert Manager AM 198, or means for alerting, monitors the alerts generated by the other subsystems, acting as it is defined for each type of alarm. Insertions on the alerts table trigger these actions. The AM also triggers alerts once it determines that a traffic received in a particular time interval has been classified as anomalous by the AD or validated as anomalous by the OA.

The alerts further trigger mitigation actions or notification action, well known to the skilled person and outside of the scope of the present invention.

The database subsystem DB 190, on one hand, stores the flow information and the filtered raw network traffic and, on the other hand, the alerts generated by the different subsystems (IDS 160, AD 180 and OA 195).

In order to monitor the mobile status data, a local agent within each mobile device intercepts the pre-defined events of interest, stores them, and sends them to the VPS periodically. The pre-defined events are chosen so the impact on the device's performance is the lowest possible.

Mobile status data comprises any information related to system events, or mobile events, such as those signals broadcast by the mobile operating system that any application running on a mobile device can intercept. For example those relating to the turning on or off of the screen or when an application is installed or uninstalled. Other system events are when the system boots, when the battery reaches a low charge level or when the shutdown process has started, among others. It is possible to monitor all these system events and trigger specific actions when they occur.

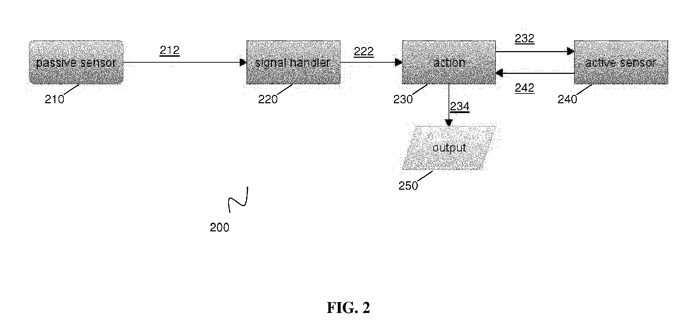

**FIG. 2** depicts the different components of the mobile device local agent 200 according to one aspect of the invention. The local agent runs in the background, inside the mobile devices, and registers the pre-defined system events, or mobile events, so that when any of them do occur they are logged together with a timestamp and, in some cases, with some additional information. There are two types of event sensors: active sensors 210 and passive sensors 240. Whereas passive sensors are those that do not require the user's interaction in order to collect mobile events, such as the accelerometer or the gyroscope, active sensors are those that are generated due to user interaction or triggered by a user action, like turning on or off the screen or installing an application.

The events collected by the active sensors 210 are used as triggers to further collect data by the passive sensors 240. For instance, when an SMS is transmitted from the mobile device, a user-triggered event "SMS SEND" is signaled 212 to a signal handler 220. The local agent, or means for event processing 230, queries 232 at least one passive sensor 240 about its status. The passive sensors signal 242 back their current status. Such passive sensors can be for example an accelerometer or proximity sensor. The event processing means 230 receives the result of the status query and transmits 234 the combined mobile internal data to a storage unit 250. The mobile status data is composed of these events and status information which are stored together with their corresponding timestamp.

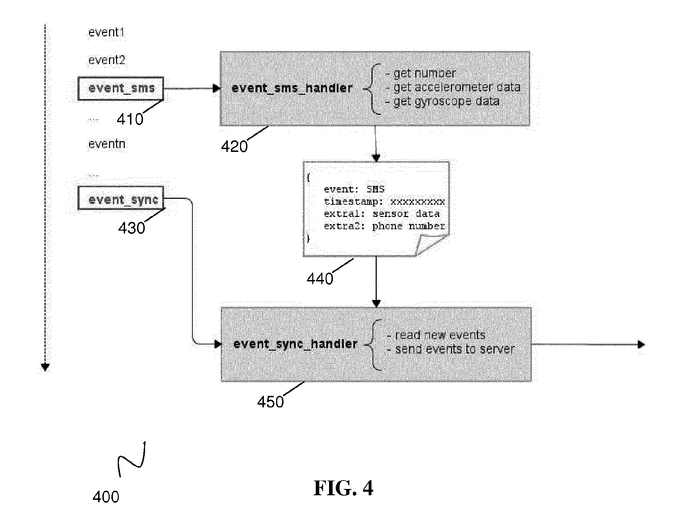

Each type of event has an associated handler, that is, an action triggered when this type of event occurs. **FIG. 4** depicts the inter-working 400 between two such handlers. A first handler 420 gathers any additional information that is necessary once an event 410 occurs. In one example, the first handler obtains the telephone number once it is detected that an SMS message has been sent. Then, the event is stored in a file on the device's local file system 440 together with the extra information and the timestamp.

A periodic synchronization event 430, *event-sync,* triggers the transmission and updating of the database. As can be seen in FIG. 4, once the event-sync handler 450 is automatically triggered, it reads the file 440 and transmits it to the external agent 310.

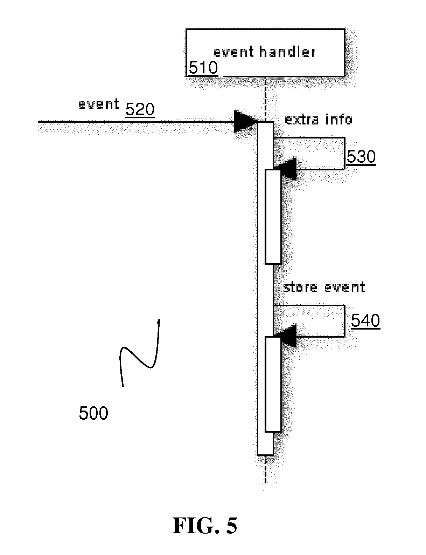

Except for the synchronization event 430, *event-sync,* all other handlers follow the same standard flow diagram 500 depicted in **FIG. 5****.** After receiving an event 520, each handler 510 collects 530 additional information, which comprises at least the current timestamp, and stores 540 the event together with its corresponding additional information in a packet in the device's local file. All events, together with their corresponding additional information, are stored waiting to be transmitted to the server that collects the events information for all the devices.

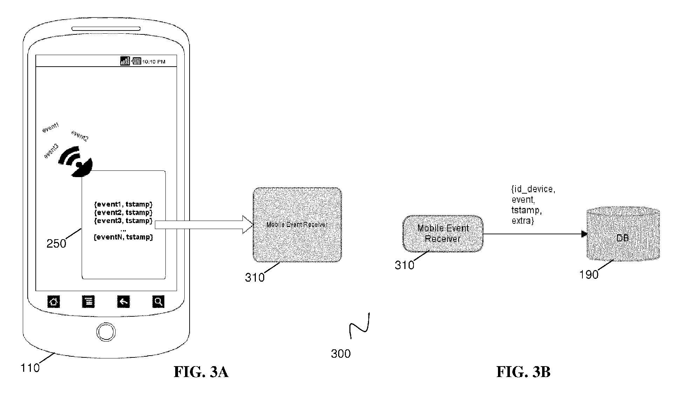

The information collected is transmitted periodically by the mobile device local agent to a server agent 150 as depicted in **FIG. 1****.** This action is depicted once more in **FIG. 3A****,** where the contents of the storage unit 250 are transmitted from the mobile device 110 to the server agent 310, or event receiver. The external agent 310 is external to the mobile device, and after collecting the mobile status data sent by the mobile devices, stores them in a server database 190 in order to be used afterwards by the different analysis processes, as depicted in **FIG. 3****B.**

The following table depicts an example structure of how mobile status data is stored:

| **Field** | **Type** |
|---|---|
| *id* | Integer |
| *id_device* | variable character *varchar* |
| *event* | variable character *varchar* |
| *tstamp* | Datetime |
| *extra* | Text |

The timestamp *tstamp* field is used to correlate the events with the network traffic.

The timestamp enables the correlation within the same time interval of mobile status and traffic data. In this manner, traffic data can be contextualized using the mobile events that happened at that time on the device. For example, the screen can tell if the user was active at the time of a connection and the accelerometer indicates whether the device was still or in motion.

Together with the timestamp, also a device identifier, ID, is stored. Such ID can be the IP address of the device if there is a controlled VPN where IP addresses are statically assigned. It can also be the MAC address of the wireless interface, the IMEI or a custom employee ID as long as it can be used to identify the device that generated the event.

An example packet of a formatted event would be:

```
 {
  timestamp: 1396000583609,
  event: "SCREEN_ON"
 }
```

Data sent to the server is formed by an array of packets with the same structure:

```
 {
  meta:
   {
    num_events: 4,
    id_device: "00:3a:67:12:a3:cb"
   }
  data:
  [
    {
      timestamp: 1396000583609,
      event: "SCREEN_ON"
    },
    {
      timestamp: 1396000587345,
      event: "APP_INSTALLED",
      extra: ["app name"]
    },
    {
      timestamp:1396000590876,
      event: "SMS_SENT",
      extra: [1, 5556589]
    },
    {
      timestamp: 1396000599385,
      event: "SCREEN_OFF"
    }
  ]
 }
```

The header of the message, marked as meta, indicates how many events are sent, as well as the unique device identifier. The data part of the message is formed by the events, together with the timestamp of the moment they were registered. There is also an *extra* field that is used to add the extra information to those events requiring it. This *extra* field is an array, so more than one element of extra information can be attached. For example, the application installed event contains the name of the application in the extra field.
A list of pre-defined events that are stored are described in the following.

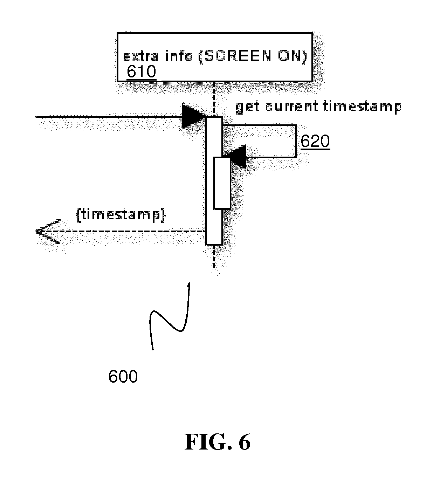

**FIG. 6** depicts the flow diagram 600 corresponding to the event **screen on and off:** whenever there is a change in the status 610 of the screen, the system registers 620 the timestamp corresponding to when the screen is turned on and turned off in order to indicate when the device is being used actively by the user. This enables dividing the network traffic data into two groups. If the screen was on, it is probable that the traffic is a result of the direct interaction of the user. On the other hand, if the screen was turned off, it is probable that the traffic was generated automatically by the system or by some application installed on the device. An example packet of a formatted event which could form part of the mobile status data would be:

```
                 {
                  timestamp: 1396000583609,
                  event: "SCREEN_ON"
                 }
```

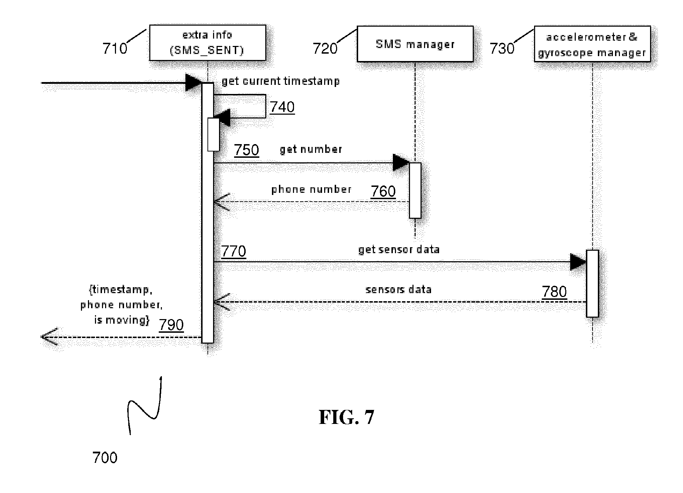

**FIG. 7** depicts the flow diagram 700 corresponding to the event **SMS sending:** After the occurrence of the event 710, the system registers 740 when SMS messages are sent together with their timestamp. When a sending is detected, information of the device's accelerometer and gyroscope 730 is gathered in steps 770 and 780. This information is used to determine whether the device is motionless, thus, not being used, or, on the contrary, if it is moving, and so, being used by the user. If the device is remaining static, the logic value '0' is sent on the packet event. Otherwise the value '1' is attached. Additionally, the destination telephone number is also stored in steps 750 and 760. An example packet of a formatted event which could form part of the mobile status data would be:

```
                 {
                  timestamp: 1396000583609,
                  event: "SMS_SENT",
                  extra: [1, 5556345]
                 }
```

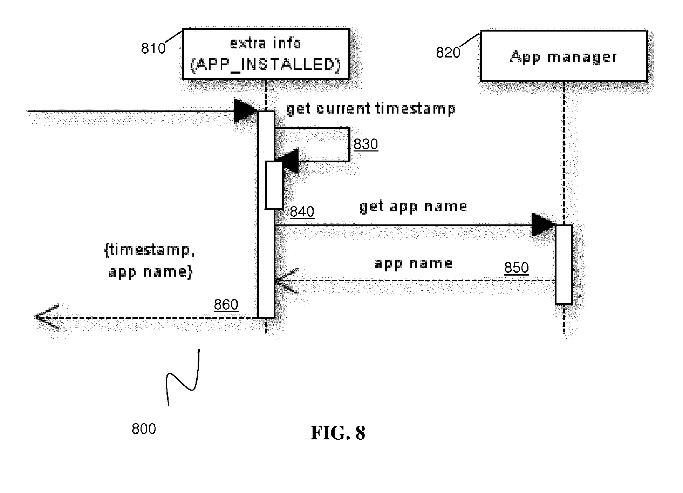

**FIG. 8** depicts the action flow diagram 800 corresponding to the event **application installation:** After the occurrence of the event 810, the system registers 860 when 830 and what applications 840 and 850 are installed, together with the timestamp. When a new and suspicious kind of network traffic occurs, it might be due to a new application. An example packet of a formatted event which could form part of the mobile status data would be:

```
                 {
                  timestamp: 1396000583609,
                  event: "APP_INSTALLED",
                  extra: ["application name"]
                 }
```

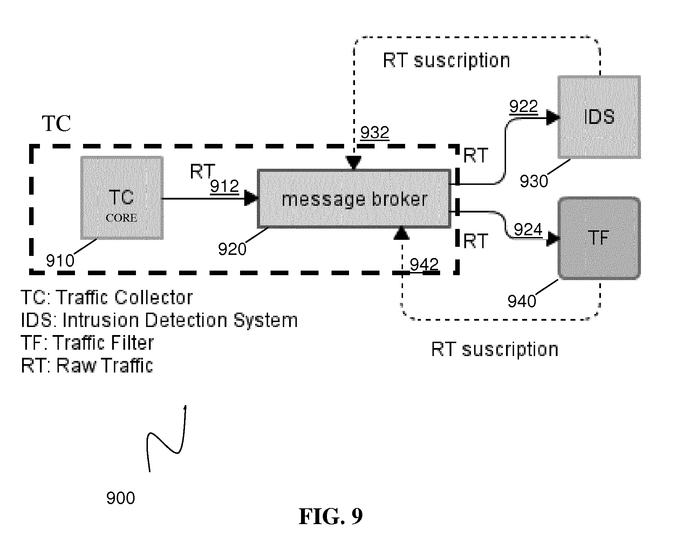

**FIG. 9** depicts a method 900 of collecting mobile traffic data, or network exchange traffic, according to one aspect of the invention. The traffic collector, or means for traffic collecting, receives or captures the raw traffic RT from the virtual private server 120. The traffic collector comprises a traffic collector core 910 and a message broker 920, which takes care of distributing the incoming data among the different components feeding from it. The message broker 920 forwards 922, 924, this data to the Intrusion Detection Subsystem IDS 930 as well as to the Traffic Filter TF 940. The network traffic is forwarded using a high-throughput distributed messaging system, from where both the IDS and the TF fetch the data.

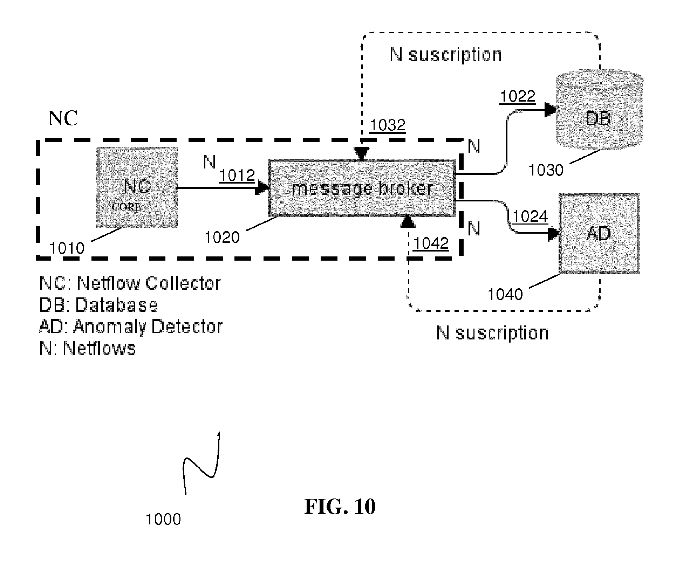

**FIG. 10** depicts a method 1000 of forwarding flow information, according to one aspect of the invention. The flow information can be information available from the Cisco NetFlow protocol widely used to extract network traffic statistics from routers. This protocol is well known to the person skilled in the art and will not be further detailed here. Likewise, the skilled person will understand that any similar protocols for collecting flow information such as Jflow, sFlow, IPFIX or CFlow would be suitable, and the invention is not restricted to the use of the NetFlow protocol. The flow information comprises at least the following:
- Timestamp.
- Protocol (TCP, UDP, and so forth).
- Origin IP address.
- Destination IP address.
- Origin port number.
- Destination port number.
- Number of packets.
- Number of bytes.

The flow collector, or means for flow information collecting, receives flow packets so the maximum volume of information to be managed is much less than in the traffic collector's case, where all the raw traffic is processed. Flow information is usually generated by network hardware such as switches and routers. These devices allow configuring the network address of the flow collector. The flow information collector NC comprises a collector core 1010 and a message broker 1020. Once the flow packets are received, the flow collector core forwards 1012 them to the message broker 1020, which takes care of distributing the information among the different components feeding from it. The message broker 1020 forwards 1022, 1024, the flow information to the database 1030 for storing and to the anomaly detector 1040 for later analysis. The flow packets are forwarded using a high-throughput distributed messaging system. Both the database and the anomaly detector subscribe to the messaging system in order to fetch the data. The following table depicts the list of flow information and their types which could form part of the mobile traffic data:

| **Field** | **Type** |
|---|---|
| *id* | uuid |
| *tstamp* | timestamp |
| *srcip* | numeric |
| *dstip* | numeric |
| *srcport* | integer |
| *dstport* | integer |
| *proto* | integer |
| *packets* | Bigint |
| *bytes* | Bigint |

The Intrusion Detection Subsystem IDS 160, or means for intrusion detection, applies static rules on the mobile traffic data, so known threats can be detected as soon as possible. In the case a rule matches, an alert will be sent to the DB.

The Traffic Filter TF 170, or means for traffic filtering, filters the network traffic before storage in database 190 to reduce the volume to more manageable levels. The traffic filters can be customized depending on the requirements of the Offline Analyzer OA 195. Only the information strictly necessary is allowed to pass through the TF further onto the OA. The TF fetches the traffic sent by the TC and filters it using defined rules and, finally, forwards the filtered traffic so it can be stored by the DB. The rest of the mobile traffic data is discarded.

The filters offer the same capabilities as the Berkeley Packet Filters, or BPFs, which comprise one or more primitives. Each primitive contains a quantifier and at least one identifier. The quantifier types are:
- *type:* Indicates to what the next identifier is referred to.
   ∘ host (host google.com). Default.
   ∘ net (net 10.0).
   ∘ port (port 22).
   ∘ portrange (portrange 7000-7010).
- *dir:* Direction of the transmission.
   ∘ src (src google.com ∼ src host google.com).
   ∘ dst (dst net 10.0).
   ∘ src or dst (src or dst host google.com).
   ∘ src and dst (src and dst net 10.0.
- *proto:* Protocols.
   ∘ tcp (tcp port 21).
   ∘ udp.
   ∘ ether.
   ∘ fddi.
   ∘ tr.
   ∘ wlan.
   ∘ ip.
   ∘ ip6.
   ∘ arp.
   ∘ rarp.
   ∘ decnet.
For example, in order to filter the DNS traffic, which is formed by udp packets to the port number 53, the following BPF filter would be used: udp and port 53.

It is also possible to perform simple comparisons on packet data, for instance, to be able to filter HTTP GET requests, the BPF filter tcp and tcp[(tcp[12] >> 4) * 4 : 4] = 0x47455420 could be used. In this case what is being compared is a position inside the Transmission Control Protocol TCP header with the static value 0x47455420, which, translated to ASCII, gives us the string "GET", used on the HTTP requests of the same type. The following table depicts the network traffic information and types which could form part of the mobile traffic data:

| **Field** | **Type** |
|---|---|
| Id | uuid |
| Tstamp | timestamp |
| Srcip | numeric |
| Dstip | numeric |
| Srcport | integer |
| Dstport | integer |
| Proto | integer |
| Payload | binary |

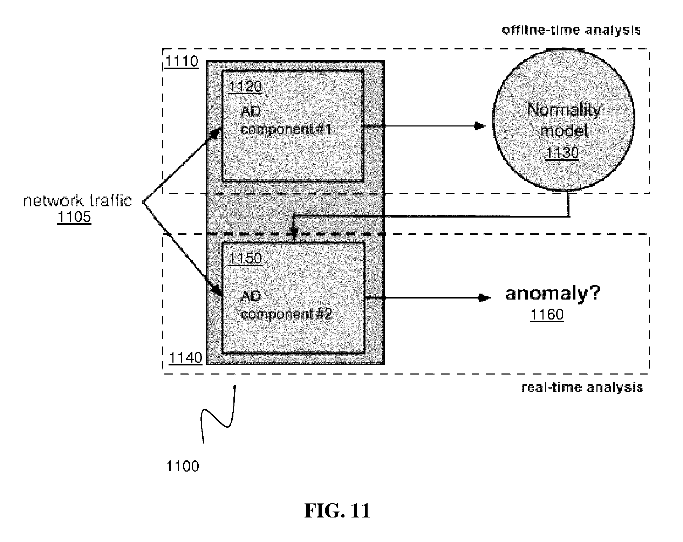

**FIG. 11** depicts a method 1100 of detecting anomalies, according to one aspect of the invention. The Anomaly Detector AD 180, or anomaly detecting means, is responsible for receiving and processing the flow traffic 1105 in order to identify anomalous patterns in the data. This is performed in two phases. In order to differentiate between normal and anomalous traffic, in a first learning phase 1110, the AD trains itself to identify which are those patterns that most frequently dominate the overall traffic. Based on this information a Normality Model 1130 is generated. This analysis of the first learning phase is performed offline.

In order to build the Normality Model 1130, a certain set of metrics are monitored. Such metrics typically comprise the number of flows, packets and bytes, the number of unique IPs or ports during a certain time window. However these metrics might change as they depend on the specific scenario and the type of anomalies that need to be detected. For example, in order to deal with data leakage problems, the geolocation of the IPs could be important for detecting a data transfer to countries that are rarely contacted within the environment analyzed. The Normality Model can be generated using the Principal Component Analysis technique (PCA). In particular, PCA is used to transform a data set from its original coordinate system to a new one. Each of the new axes of the system, called Principal Components, or PCs, are sorted in descending order according to the maximum variance of the original data, that is, the first PC is the one explaining the maximum variance. Each PC is formed by a linear combination of the input metrics. Under the assumption that the strongest patterns represent normality, PCA is used to retain only the first "k" PCs that account for most of the variance, that is, small changes in the original time series are lost in this data transformation. This set of PCs is known as the normal subspace. All the other PCs representing less significant variations define the residual subspace. The number of normal PCs, "k", will vary depending on the specific environment and the sensitivity desired for anomaly detector. As an example of a normal sample, the result of the PCA technique would be that a user's normal behaviour is to consume 1 GB of data per week, and to remain within a 5 km radius of his workplace during the day and 2 km radius of its home during the night.

Once the Normality Model 1130 has been generated, the current traffic is compared against it to determine if there are any significant deviations from the norm. The comparison step is performed based on whether each list of values for every metric over time conforms to a different time series. Hence the current traffic is analysed over a time interval to analyse if it fits the shape of the normality extracted from the original time series. Any deviation from such pattern above a certain threshold is considered inconsistent with normality and therefore, as potentially anomalous traffic. More specifically, this deviation using PCA is detected by measuring the magnitude of the projection of the incoming data into the residual subspace described above (if such magnitude overcomes a threshold, an anomaly is flagged). Note that the anomaly detection component is not limited to the PCA algorithm only. Other alternatives based on detecting large deviations from forecasted values or based on signal analysis could be used instead although they have showed to perform worse for this particular domain (detection of network anomalies). These other mechanisms are well known and beyond the scope of the present invention.

Due to the extremely dynamic behaviour of the traffic, the Normality Model 1130 is periodically updated to guarantee that it reflects the most dominant patterns of the network, thereby maximizing the reliability of the decision making process.

In the second phase 1140, which is performed in real-time, the AD determines 1160 whether an anomaly has occurred by performing a comparison 1150 of the incoming traffic 1105 with the Normality Model 1130 and determining deviations from such model. Based on these deviations, the AD reports 1160 network anomalies (in real-time). There are three possible outcomes, or security indexes, for the traffic analyzed at each timestep. Further, different risk levels can be assigned to the security indexes, providing an indication of the level of confidence in the decision making process, and therefore the level of risk corresponding to the security index:
1. The traffic is normal (with high confidence).
2. The traffic is suspicious (with low/medium confidence).
3. The traffic is definitely anomalous (with high confidence).

When the current traffic fits the expected normality patterns, it is determined that the mobile traffic data correspond to the first security index *("Normal Traffic").* In such case no anomaly flag is set. When the AD detects some uncommon behaviour, the security index assigned is either anomalous or suspicious. When there is strong evidence of an anomaly, that is, cases where proof of abnormality is clear, it is determined that the mobile traffic data correspond to the third outcome *("Anomalous Traffic").* When the evidence supporting this conclusion is not enough to make a final decision, it is determined that the mobile traffic data correspond to the second outcome *("Suspicious Traffic*")*.* This security index can adopt two different risk levels, either low or medium.

In the second security index *("Suspicious Traffic"),* the corresponding mobile traffic data is further analyzed by correlating it with the mobile status data in order to validate it as either normal traffic or definitely anomalous traffic. In particular, the Offline Analyzer OA 195 is responsible for deciding whether the combination of events that took place within the same time interval provide enough evidence to make a final decision on the suspicious traffic. The objective is to review all such traffic and determine whether it is normal or should be finally classified as anomalous. For example, in case some suspicious activity occurred while the device had its screen turned off, the OA would conclude *"Anomalous Traffic".*

When the AD component is confident about the type of traffic, that is, when the outcome is *"Normal traffic"* or *"Anomalous traffic",* the mobile status data is not explored or used in the determination process. However, when the outcome is *"Suspicious traffic",* further information is needed to make the final decision as the confidence on the classification is low.

The following table depicts the rules used for the decision making process when the outcome is *"Suspicious traffic,* in order to determine whether the mobile traffic data exchanged during the current time window under analysis definitely corresponds to anomalous activity or not. Based on this table, which correlates mobile status data with mobile traffic data, a determination is made on whether there is anomalous activity or not as the security index is validated.

| Security Index | Mobile Status Data | | Validated Security Index | Confidence Level |
|---|---|---|---|---|
| Normal traffic | | | Secure | High |
| Suspicious traffic | Screen status | off | **Anomalous** | High |
| | | on | Secure | Low |
| | App installed | | **Anomalous** | Medium |
| | SMS sent | | Secure | Low |
| | Device moving? | No | **Anomalous** | High |
| | | Yes | Secure | Low |
| Anomalous traffic | | | **Anomalous** | High |

The suspicious traffic is verified by these rules during a particular time interval, or window. As can be seen, when, during the same time window, the screen is off, or an application is installed, or the device is not moving, the system outcome is updated to anomalous instead of suspicious. A level of confidence is assigned to the decision making process as well. So in the first and third case the decision confidence level is high, but in the second case medium. This is due to the fact that inferring the anomalous traffic is due to the application installed is not necessarily true as a legitimate application might have been installed during the same time window.

In another scenario, when the screen is on, or an SMS has been sent, or the device is moving, the outcome of the validation process is that the suspicious traffic is in fact secure, and relates to normal traffic. However in these cases the confidence level is set to low, thereby indicating that although the outcome is positive, it is a result of an originally suspicious situation, and therefore care should be taken.

The validation process can be inferred by the table, or can be programmed as an algorithm. Hence, a validation process is developed which updates the outcome and confidence level of all suspicious mobile traffic data in an automatic fashion based on a combination of single events. One such rule, applying:
**IF** (screen is off **OR** device is still) **AND** (app installed **OR** SMS sent) **THEN** System outcome is **Anomalous** with High Confidence Level;

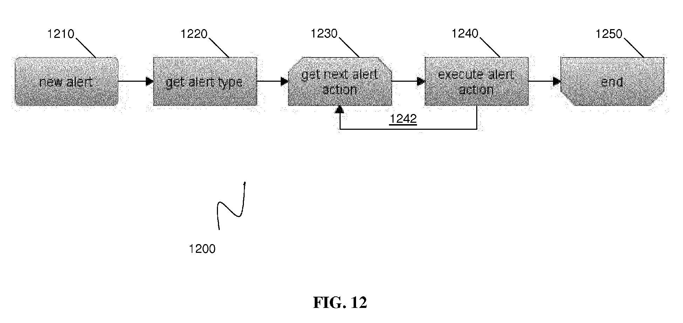

Once the anomaly determination and validation steps are complete, alerts are triggered in case it has been determined that the security of the mobile device is under threat due to a confirmed anomalous traffic. **FIG. 12** depicts a method 1200 for managing new alerts, according to one aspect of the invention. As soon as a new alert is generated 1210 by one of the IDS 160, or AD 180 or OA 195, its alert_type is identified 1220. The action corresponding to that alert_type is then identified 1230 and performed, or executed 1240. In case there is more than a single action to perform, the process returns to fetch 1242 the next action and to perform it. Once all alerts have been performed, the process ends 1250. The following details a list of alerts, as well as their types and actions to perform:

### Alerts table, description:

- **id:** Identifier (auto-generated).
- **component:** Subsystem that generated the alert (IDS, AD or OA).
- **rule:** Rule that generated the alert.
- **origin:** Origin of the connection.
- **destination:** Destination of the connection.
- **description:** Alert description.

### Alert_types table, description:

- **id**: Identifier (auto-generated).
- **priority:** Priority level of the alert (LOW, MEDIUM, HIGH or URGENT).
- **name:** Alert name.

### Alert_actions, description:

- **action:** Action triggered by the alert.
   ∘ NONE: No action triggered.
   ∘ ADD_TO_DIGEST: Alert added to the alerts digest identified by the *action_parameters* field.
   ∘ EMAIL: Alert is immediately sent by e-mail to the addresses defined on the *action_parameters* field.
- **action_parameters:** Parameters for the action.
   ∘ For ADD_TO_DIGEST:
      ■ DAILY: Daily alert digest.
      ■ WEKLY: Weekly alert digest.
      ■ MONTHLY: Monthly alert digest.
   ∘ For EMAIL:
      ■ E-mail addresses to where send the alerts.

Hence, all the different aspects of the invention provide a system and method of enhancing the security of a mobile device, and of the infrastructure in which it operates, as traffic data which it exchanges with counterpart entities is analysed to filter out suspicious activity, and in a next step validated based on data corresponding to the mobile device itself, or its use.

Furthermore, it is to be understood that the embodiments, realizations, and aspects described herein may be implemented by various means in hardware, software, firmware, middleware, microcode, or any combination thereof. Various aspects or features described herein may be implemented, on one hand, as a method or process or function, and on the other hand as an apparatus, a device, a system, or computer program accessible from any computer-readable device, carrier, or media. The methods or algorithms described may be embodied directly in hardware, in a software module executed by a processor, or a combination of the two.

The various means may comprise software modules residing in RAM memory, flash memory, ROM memory, EPROM memory, EEPROM memory, registers, hard disk, a removable disk, a CD-ROM, or any other form of storage medium known in the art.

The various means may comprise logical blocks, modules, and circuits may be implemented or performed with a general purpose processor, a digital signal processor (DSP), and application specific integrated circuit (ASIC), a field programmable gate array (FPGA), or other programmable logic device, discrete gate or transistor logic, discrete hardware components, or any combination thereof designed to perform the functions described. A general-purpose processor may be a microprocessor, but in the alternative, the processor may be any conventional processor, controller, microcontroller, or state machine.

The various means may comprise computer-readable media including, but not limited to, magnetic storage devices (for example , hard disk, floppy disk, magnetic strips, etc.), optical disks (for example , compact disk (CD), digital versatile disk (DVD), etc.), smart cards, and flash memory devices (for example , EPROM, card, stick, key drive, etc.). Additionally, various storage media described herein can represent one or more devices and/or other machine-readable media for storing information. The term "machine-readable medium" can include, without being limited to, various media capable of storing, containing, and/or carrying instruction(s) and/or data. Additionally, a computer program product may include a computer readable medium having one or more instructions or codes operable to cause a computer to perform the functions described herein.

What has been described above includes examples of one or more embodiments. It is, of course, not possible to describe every conceivable combination, or permutation, of components and/or methodologies for purposes of describing the aforementioned embodiments. However one of ordinary skill in the art will recognize that many further combinations and permutations of various embodiments are possible within the general inventive concept derivable from a direct and objective reading of the present disclosure. Accordingly, it is intended to embrace all such alterations, modifications and variations that fall within scope of the appended claims.

## Claims

1. An apparatus in a security server for enhancing the security of a communication system comprising at least one mobile device and at least one entity communicating with the at least one mobile device, wherein the apparatus comprises:
means for receiving mobile status data corresponding to mobile device events;
means for collecting mobile traffic data corresponding to network traffic exchanged by the at least one mobile device with the at least one entity of the communication system;
means for determining a validated security index based on the mobile traffic data as well as on the mobile status data.

2. The apparatus of claim 1, wherein the mobile status data and mobile traffic data are time-stamped, and the mobile status data further comprises a mobile device identifier.

3. The apparatus of claim 2, wherein the mobile status data comprises data collected by passive sensors, such as data from accelerometers or gyroscopes, indicating whether the mobile device is still or moving, and/or the mobile status data comprises data collected by active sensors, such as whether the screen is on/off, or whether an application is being installed, or whether a text message is being transmitted.

4. The apparatus of claim 2, further comprising generating a normality model based on the mobile traffic data, the normality model indicating normal traffic exchange.

5. The apparatus of claim 4, further comprising, before determining the validated security index, determining periodically in time intervals a security index based only on the mobile traffic data, wherein the security index is one of normal traffic, suspicious traffic, or anomalous traffic.

6. The apparatus of claim 5, wherein determining the security index comprises comparing in real-time current mobile traffic data with the normality model and classifying the current traffic as one of the three security indexes based on the result of the comparison.

7. The apparatus of claim 6, wherein determining the security index further comprises assigning a confidence level to the security index as one of low, medium, or high confidence level.

8. The apparatus of claim 6, wherein determining the validated security index comprises validating the suspicious traffic as definitely normal or definitely anomalous traffic based also on the mobile status data.

9. The apparatus of claim 5, further comprising issuing an alarm when the security index or validated security index corresponds to anomalous traffic.

10. The apparatus of claim 2, wherein the means for collecting mobile traffic data comprises means for collecting traffic and means for flow information collecting.

11. An apparatus in a mobile device for enhancing the security of a communication system comprising at least one mobile device and at least one entity communicating with the at least one mobile device, wherein the apparatus comprises:
means for collecting information corresponding to events of the mobile device;
means for transmitting mobile status data comprising the event information together with a timestamp and mobile device identifier to a security server enabling the security server to determine a validated security index based on the mobile traffic data as well as on the mobile status data.

12. A method in a security server for enhancing the security of a communication system comprising at least one mobile device and at least one entity communicating with the at least one mobile device, wherein the method comprises:
receiving mobile status data corresponding to mobile device events;
collecting mobile traffic data corresponding to network traffic exchanged by the at least one mobile device with the at least one entity of the communication system;
determining a validated security index based on the mobile traffic data as well as on the mobile status data.

13. A method in a mobile device for enhancing the security of a communication system comprising at least one mobile device and at least one entity communicating with the at least one mobile device, wherein the method comprises:
collecting information corresponding to events of the mobile device;
transmitting mobile status data comprising the event information together with a timestamp and mobile device identifier to a security server enabling the security server to determine a validated security index based on the mobile traffic data as well as on the mobile status data.

14. A computer readable medium comprising instructions for performing the method steps of claim 12 once executed on a processor in a security server.

15. A computer readable medium comprising instructions for performing the method steps of claim 13 once executed on a processor in a mobile device.
